(19) Europäisches Patentamt
European Patent Office
Office européen des brevets

(11) **EP 4 710 802 A1**

(12) **EUROPEAN PATENT APPLICATION**
published in accordance with Art. 153(4) EPC

(43) Date of publication:
**18.03.2026 Bulletin 2026/12**

(21) Application number: **24806211.9**

(22) Date of filing: **01.04.2024**

(51) International Patent Classification (IPC):
*A24F 40/46* (2020.01)      *A24F 40/40* (2020.01)

(52) Cooperative Patent Classification (CPC):
**A24F 40/10; A24F 40/40; A24F 40/42; A24F 40/46; A24F 40/57**

(86) International application number:
**PCT/CN2024/085343**

(87) International publication number:
**WO 2024/234851 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.05.2023 CN 202310540174**

(71) Applicant: **Smoore International Holdings Limited Grand Cayman, KY1-1111 (KY)**

(72) Inventors:
- **WANG, Jianguo**
  **Shenzhen, Guangdong 518102 (CN)**
- **FAN, Wenyuan**
  **Shenzhen, Guangdong 518102 (CN)**

- **ZHANG, Ying**
  **Shenzhen, Guangdong 518102 (CN)**
- **JIANG, Dayue**
  **Shenzhen, Guangdong 518102 (CN)**
- **ZHAO, Yueyang**
  **Shenzhen, Guangdong 518102 (CN)**
- **GONG, Boxue**
  **Shenzhen, Guangdong 518102 (CN)**

(74) Representative: **Winter, Brandl - Partnerschaft mbB**
**Alois-Steinecker-Straße 22**
**85354 Freising (DE)**

(54) **HEATING ASSEMBLY, ATOMIZER, AND ELECTRONIC ATOMIZATION DEVICE**

(57)    This application discloses a heating assembly, an atomizer, and an electronic atomization device, and a heating assembly, an atomizer, and an electronic atomization device. The heating assembly includes a porous base and a heating element. The porous base has a plurality of disordered pores. The porous base includes a liquid absorbing surface and an atomization surface that are oppositely arranged. A plurality of through pores extending through the liquid absorbing surface and the atomization surface are provided on the porous base. The liquid guide rate of each disordered pore is less than the liquid guide rate of each through pore. The heating element is arranged on the atomization surface. In this way, the heating assembly can operate either under low superheat or high superheat, and the same heating assembly can be applied to different atomization modes.

FIG. 1

## Description

## CROSS-REFERENCE TO RELATED APPLICATIONS

This application claims priority to Chinese Patent Application No. 202310540174.6, filed on May 12, 2023, which is incorporated by reference in its entirety.

## TECHNICAL FIELD

This application relates to the field of electronic atomization technologies, and in particular, to a heating assembly, an atomizer, and an electronic atomization device.

## BACKGROUND

An electronic atomization device is composed of a heating assembly, a battery, a control circuit, and the like. As a core element of the electronic atomization device, the heating assembly defines an atomization effect and use experience of the electronic atomization device.

As technologies develop, users have increasing requirements on a function of a heating assembly of an electronic atomization device.

## SUMMARY

This application provides a heating assembly, an atomizer, and an electronic atomization device, to enable the heating assembly to operate in different atomization modes, thereby improving a function of the heating assembly.

To resolve the foregoing technical problem, a first technical solution provided in this application is as follows: A heating assembly is provided, which is applied to an electronic atomization device, and is configured to atomize an aerosol generating substrate. The heating assembly includes a porous base and a heating element. The porous base has a plurality of disordered pores. The porous base includes a liquid absorbing surface and an atomization surface that are oppositely arranged. A plurality of through pores extending through the liquid absorbing surface and the atomization surface are provided on the porous base. The liquid guide rate of each disordered pore is less than the liquid guide rate of each through pore. The heating element is arranged on the atomization surface.

In an implementation, the porosity of the disordered pores of the porous base is in a range of 3% to 40%.

In an implementation, the ratio of the length of the through pore to the pore size of the through pore is in a range of 20:1 to 3:1.

In an implementation, the liquid absorbing surface and the atomization surface are arranged in parallel, the through pore is perpendicular to the liquid absorbing surface, and the thickness of the porous base is the same as the length of the through pore.

In an implementation, the ratio of the center-to-center distance between two adjacent through pores to the pore size of the through pore is in a range of 3:1 to 1.5:1.

In an implementation, the pore size of the through pore is in a range of 1 $\mu$m to 100 $\mu$m, and preferably, 10 $\mu$m to 50 $\mu$m.

In an implementation, the thickness of the porous base is in a range of 0.1 mm to 1 mm.

In an implementation, the thermal conductivity of the porous base is in a range of 0.1 W/m·K to 10 W/m·K.

In an implementation, the plurality of through pores are distributed in an array.

In an implementation, the heating element is a heating film, a part of the heating film is arranged on the atomization surface, and an other part of the heating film extends into the through pore.

To resolve the foregoing technical problem, a second technical solution provided in this application is as follows: An atomizer is provided, including a liquid storage cavity and a heating assembly. The liquid storage cavity is configured to store an aerosol generating substrate. The heating assembly is in fluid communication with the liquid storage cavity. The heating assembly is configured to atomize the aerosol generating substrate. The heating assembly is the heating assembly of any one of the foregoing implementations.

In an implementation, the liquid storage cavity is an open liquid storage cavity, and the atomizer further includes a component detection element configured to detect a component of the aerosol generating substrate guided to the liquid absorbing surface of the porous base.

In an implementation, the atomizer further includes a temperature detection element configured to detect the temperature of the heating element.

In an implementation, the component detection element is arranged on the porous base, or the component detection element is arranged in the liquid storage cavity.

In an implementation, the liquid storage cavity includes a plurality of liquid storage sub-cavities, the atomization surface includes a plurality of atomization regions, the plurality of atomization regions and the plurality of liquid storage sub-cavities are arranged in one-to-one correspondence, the heating element includes a plurality of independent heating sub-elements arranged in the plurality of atomization regions, the plurality of heating sub-elements and the plurality of atomization regions are arranged in one-to-one correspondence, and one component detection element is arranged in each liquid storage sub-cavity or one component detection element is arranged on a part of the porous base corresponding to each atomization region.

To resolve the foregoing technical problem, a third technical solution provided in this application is as follows: An electronic atomization device is provided, including an atomizer and a main unit. The atomizer is the atomizer of any one of the foregoing implementations. The main unit is configured to provide electric energy for operation of the heating assembly of the atomizer and control the heating assembly of the atomizer to atomize the aerosol generating substrate.

In an implementation, the main unit includes a control circuit, the control circuit is configured to control an atomization mode of the heating element, the atomization mode includes a first atomization mode and a second atomization mode, in the first atomization mode, the control circuit controls the temperature of the heating element to be greater than the bubble point temperature of the aerosol generating substrate and a difference between the temperature of the heating element and the bubble point temperature of the aerosol generating substrate to be less than or equal to a temperature threshold, and in the second atomization mode, the control circuit controls the temperature of the heating element to be greater than the bubble point temperature of the aerosol generating substrate and the difference between the temperature of the heating element and the bubble point temperature of the aerosol generating substrate to be greater than the temperature threshold.

In an implementation, temperature threshold is in a range of 20°C to 40°C.

In an implementation, the atomizer is the atomizer of any one of foregoing implementations, the main unit further includes a memory, the memory stores a correspondence between a component of the aerosol generating substrate and the atomization mode, the control circuit is electrically connected to the component detection element, and the control circuit is configured to select, based on the component of the aerosol generating substrate detected by the component detection element, the first atomization mode or the second atomization mode to control the heating element for heating.

In an implementation, the atomizer is the foregoing atomizer, and the control circuit is configured to select, based on the component of the aerosol generating substrate in the liquid storage sub-cavity detected by the component detection element, the first atomization mode or the second atomization mode, to control the heating sub-element corresponding to the liquid storage sub-cavity for heating.

Beneficial effects of this application are as follows: Different from the related art, this application discloses a heating assembly, an atomizer, and an electronic atomization device, and a heating assembly. The heating assembly includes a porous base and a heating element. The porous base has a plurality of disordered pores. The porous base includes a liquid absorbing surface and an atomization surface that are oppositely arranged. A plurality of through pores extending through the liquid absorbing surface and the atomization surface are provided on the porous base. The liquid guide rate of each disordered pore is less than the liquid guide rate of each through pore. The heating element is arranged on the atomization surface. In this way, the heating assembly can operate either under low superheat or high superheat, and the same heating assembly can be applied to different atomization modes.

## BRIEF DESCRIPTION OF THE DRAWINGS

To more clearly describe technical solutions in embodiments of this application, drawings required for the description of the embodiments are briefly described below. Clearly, the drawings in the following description show only some embodiments of this application, and a person of ordinary skill in the art may derive other drawings from these drawings without making creative efforts.

FIG. 1 is a schematic structural diagram of a heating assembly according to an embodiment of this application.

FIG. 2 is a schematic diagram of a state of the heating assembly shown in FIG. 1 in a low-superheat atomization mode.

FIG. 3 is a schematic diagram of a state of the heating assembly shown in FIG. 1 in a high-superheat atomization mode.

FIG. 4 is a diagram of an experimental result of Experiment I using the heating assembly according to this application.

FIG. 5 is a diagram of an experimental result of Experiment II using the heating assembly according to this application.

FIG. 6 is a diagram of an experimental result of Experiment III using the heating assembly according to this application.

FIG. 7 is a diagram of an experimental result of using a heating assembly having through pores provided on a dense base.

FIG. 8 is a diagram of an experimental result of a ratio of a thickness of a dense base to a pore size of a through pore and an atomization amount.

FIG. 9 is a schematic structural diagram of a first embodiment of an atomizer according to this application.

FIG. 10 is a schematic structural diagram of a second embodiment of the atomizer according to this application.

FIG. 11 is a schematic structural diagram of an electronic atomization device according to an embodiment of this application.

## DETAILED DESCRIPTION

Technical solutions of embodiments of this application are clearly and completely described below in combination with drawings of the embodiments of this application. Clearly, the described embodiments are merely some embodiments rather than all embodiments of this application. All other embodiments obtained by a person of ordinary skill in the art based on the embodiments of this application without making creative efforts shall fall within the protection scope of this application.

In the following description, for illustration rather than limitation, specific details such as a specific system structure, interface, and technology are proposed to thoroughly understand this application.

The terms "first", "second", and "third" in this application are merely used for description, and shall not be understood as indicating or implying relative importance or implicitly indicating a quantity of indicated technical features. Therefore, features defined by "first", "second", and "third" may explicitly or implicitly include at least one of the features. In the description of this application, "a plurality of" means at least two, such as two and three, unless otherwise definitely and specifically limited. All directional indications (such as upper, lower, left, right, front, and rear) in the embodiments of this application are merely used for explaining relative position relationships, movement situations, or the like between the various components in a specific posture (as shown in the drawings). If the specific posture changes, the directional indications change accordingly. In the embodiments of this application, the terms "include", "have", and their any variations are intended to cover non-exclusive encompassing. For example, a process, method, system, product, or apparatus that includes a series of steps or units is not limited to the listed steps or units, but instead further optionally includes a step or unit that is not listed, or further optionally includes another step or component inherent to the process, method, product, or apparatus.

"Embodiment" mentioned in the specification means that particular features, structures, or characteristics described with reference to the embodiment may be included in at least one embodiment of this application. The phrase appearing at various locations in the specification unnecessarily indicates a same embodiment or an independent or alternative embodiment exclusive to another embodiment. A person skilled in the art explicitly or implicitly understands that the embodiments described in the specification may be combined with other embodiments.

This application is described in detail with reference to the drawings and embodiments.

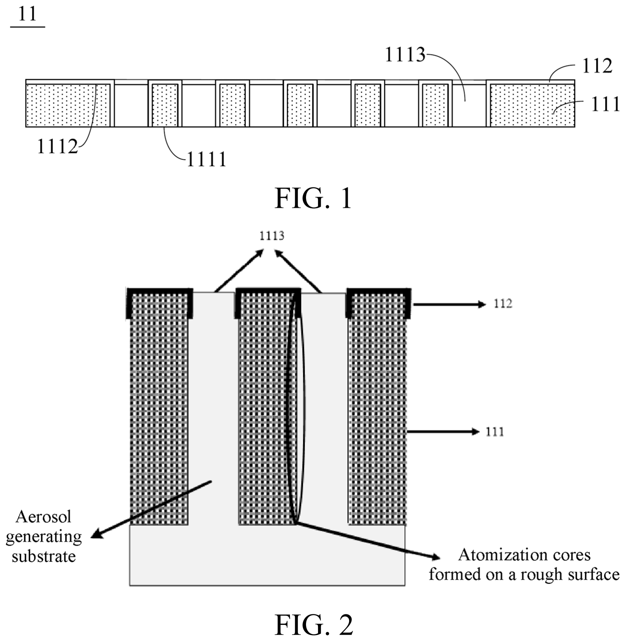

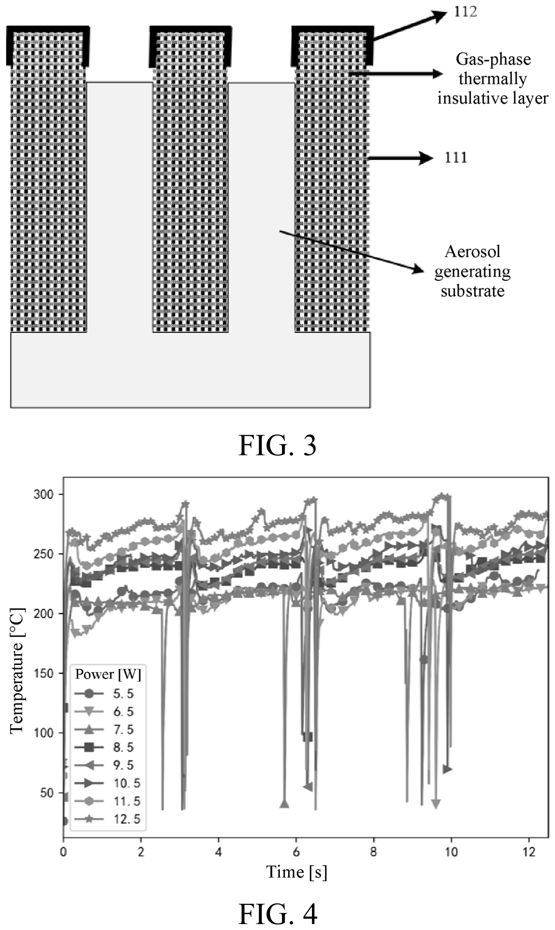

Referring to FIG. 1 to FIG. 3, FIG. 1 is a schematic structural diagram of a heating assembly according to an embodiment of this application, FIG. 2 is a schematic diagram of a state of the heating assembly shown in FIG. 1 in a low-superheat atomization mode, and FIG. 3 is a schematic diagram of a state of the heating assembly shown in FIG. 1 in a high-superheat atomization mode.

The heating assembly 11 includes a porous base 111 and a heating element 112. The porous base 111 has a plurality of disordered pores. Exemplarily, the porous base 111 is a porous ceramic. The porous base 111 is formed by using a porous material, and inherently has a plurality of disordered pores. The porous base 111 includes a liquid absorbing surface 1111 and an atomization surface 1112 that are oppositely disposed. A plurality of through pores 1113 extending through the liquid absorbing surface 1111 and the atomization surface 1112 are provided on the porous base 111. The plurality of disordered pores and the plurality of through pores 1113 are both used for guiding an aerosol generating substrate from the liquid absorbing surface 1111 to the atomization surface 1112. The liquid guide rate of each disordered pore is less than the liquid guide rate of each through pore 1113. The heating element 112 is arranged on the atomization surface 1112 of the porous base 111, and the heating element 112 is configured to atomize the aerosol generating substrate on the atomization surface 1112 to generate aerosols.

A specific test method for determining that the liquid guide rate of the disordered pore is less than the liquid guide rate of the through pore 1113 is as follows: The applicant places the liquid absorbing surface 1111 of the dry porous base 111 on the aerosol generating substrate, and observes a time spent for wetting each of the through pore 1113 on the atomization surface 1112 of the porous base 111 and the disordered pore through a high-speed camera. It is found that the time spent for wetting the through pore 1113 on the atomization surface 1112 is less than the time spent for wetting the disordered pore. Therefore, the liquid guide rate of the disordered pore is less than the liquid guide rate of the through pore 1113.

The disordered pores inherent to the porous base 111 are irregularly distributed and extended micropores formed during manufacturing of the porous base 111. The disordered pores inherent to the porous base 111 are in communication with each other. The through pore 1113 provided on the porous base 111 extends from the liquid absorbing surface 1111 to the atomization surface 1112 substantially along a straight line. In other words, a center line of the through pore 1113 is substantially a straight line. The center line of the through pore 1113 may be perpendicular to the atomization surface 1112, or may not be perpendicular to the atomization surface 1112. Preferably, the center line of the through pore 1113 is perpendicular to the atomization surface 1112. Adjacent through pores 1113 are not directly in communication, and instead are in communication through a disordered pore. In other words, the pore wall of the through pore 1113 included the disordered pore. The plurality of through pores 1113 may be arranged in order (for example, distributed in an array) or arranged out of order (for example, distributed randomly). As for through pores provided on a dense base, adjacent through pores are not in communication, unless transverse pores are provided to bring the adjacent through pores into communication.

Providing the plurality of through pores 1113 on the porous base 111 that has a plurality of disordered pores significantly increases the liquid guide rate of the entire porous base 111. In addition, because the liquid guide rate of the disordered pores is less than the liquid guide rate of the through pore 1113, the same heating assembly 11 can perform atomization in either a low-superheat atomization mode or a high-superheat atomization mode. In other words, the same heating assembly 11 can be applied to different atomization modes. Low superheat means that a difference between the temperature of the heating element 112 and the bubble point temperature of the aerosol generating substrate is less than or equal to a temperature threshold. High superheat means that the difference between the temperature of the heating element 112 and the bubble point temperature of the aerosol generating substrate is greater than the temperature threshold. The temperature threshold is in a range of 20°C to 40°C. For example, the temperature threshold is 30°C. A bubble point is a critical point of a temperature at which a first batch of bubbles are separated from a liquid phase, which is the pressure of the first batch of bubbles separated from the liquid phase at a constant temperature, or the temperature of the first batch of bubbles separated from the liquid phase at a constant pressure. A temperature at which a liquid mixture starts to boil under a pressure is referred to as a bubble point under the pressure.

When the heating assembly 11 performs atomization in the low-superheat atomization mode, the aerosol generating substrate is guided by the disordered pore and the through pore 1113 from the liquid absorbing surface 1111 to the atomization surface 1112. The through pore 1113 provides a primary liquid supply function, and the disordered pore provides an auxiliary liquid supply function. Because the porous base 111 is non-dense and has a plurality of disordered pores, the wall surface of the through pore 1113 provided on the porous base 111 are non-smooth (rough) and rich in the atomization cores. During heating, air inside the micro-nano pores (i.e. the disordered pores of the porous base 111) escape to form small bubbles, which may serve as the atomization cores (the atomization cores can trigger liquid boiling). In this way, the aerosol generating substrate can boil in a timely manner after reaching the boiling point, and therefore the temperature of the aerosol generating substrate does not further rise to a very high level, which avoids violent boiling. This facilitates efficient atomization of the aerosol generating substrate under low superheat. Compared with a heating assembly using a dense base having a plurality of through pores, the structure of the porous base 111 having a plurality of through pores 1113 used in this application can achieve a lower atomization temperature due to presence of the atomization cores. During atomization in the low-superheat atomization mode, both the through pore 1113 and the disordered pore can achieve sufficient liquid supply. Sufficient liquid supply means that after a stable atomization stage (rather than a heating stage) starts, the liquid consumed by the heating element 112 for atomization can be complemented by the disordered pore and the through pore 1113 in a timely manner. For example, in a pulse heating condition, in a time interval from a time at which previous pulse heating ends to a time at which next pulse heating starts, the through pore 1113 and the disordered pore can both complement the liquid consumed for heating in the previous pulse heating process.

When the heating assembly 11 performs atomization in the high-superheat atomization mode, in a heating-for-atomization stage (a stage in which the heating element 112 starts heating to an atomization temperature of the aerosol generating substrate), the aerosol generating substrate is guided by the disordered pore and the through pore 1113 from the liquid absorbing surface 1111 to the atomization surface 1112. The through pore 1113 provides a primary liquid supply function, and the disordered pore provides an auxiliary liquid supply function. As the atomization proceeds, the aerosol generating substrate guided to the proximity of the atomization surface 1112 through the disordered pores is quickly atomized by the heating element 112, causing local insufficient liquid supply. Therefore, a gas-phase thermally insulative layer is formed in the disordered pore close to the atomization surface 1112, that is, the aerosol generating substrate in the disordered pore close to the heating element 112 changes in phase. Because the thermal conductivity of the gas-phase thermally insulative layer is much lower than the thermal conductivity of the liquid phase and the thermal conductivity of the porous base 111, forming the gas-phase thermally insulative layer around the heating element 112 reduces the rate at which the aerosol generating substrate consumes the heat generated by the heating element 112. Therefore, the temperature of the heating element 112 increases significantly, increasing the superheat of the atomization process and achieving a high atomization temperature. During atomization in the high-superheat atomization mode, the through pore 1113 can achieve sufficient liquid supply, but the disordered pore achieves insufficient liquid supply. Insufficient liquid supply means that after a stable atomization stage (rather than a heating stage) starts, the liquid consumed by the heating element 112 for atomization cannot be complemented in a timely manner. For example, in a pulse heating condition, in a time interval from a time at which previous pulse heating ends to a time at which next pulse heating starts, the liquid replenished by the disordered pore at the corresponding position cannot complement the liquid consumed for heating at the corresponding position in the previous pulse heating process.

It may be understood that, because the liquid guide rate of the disordered pore is less than the liquid guide rate of the through pore 1113, a specific power (a power for mode switching between the high-superheat atomization mode and the low-superheat atomization mode) exists, below which the disordered pore and the through pore 1113 are in a state of sufficient liquid supply and the temperature of the atomization surface 1112 does not obviously increase as the power increases, which is a wet-heating mode, that is, the low-superheat atomization mode, and above which the liquid supply of the disordered pore is insufficient and the disordered pore adjacent to the atomization surface 1112 is hollowed out, which provides thermal insulation, thereby further increasing the temperature of the atomization surface 1112, and causing the temperature of the atomization surface 1112 to obviously increase as the power increases, which is an over-heating mode, that is, the high-superheat atomization mode. In the over-heating mode, the power is controlled within a specific range for slight over-heating, to achieve a dry taste.

If the same aerosol generating substrate has different atomization effects under the two different atomization modes, i.e., the low-superheat atomization mode and the high-superheat atomization mode, for example, has different tastes, when using the heating assembly 11 provided in this application, a user may select the low-superheat atomization mode or the high-superheat atomization mode for the heating assembly 11, which improves user experience. For different aerosol generating substrates, some of which require atomization under low superheat to generate their distinctive tastes, while others require atomization under high superheat to generate their distinctive tastes, a user may select the low-superheat atomization mode or the high-superheat atomization mode for the heating assembly 11 based on the properties of the aerosol generating substrates. Therefore, the same heating assembly 11 may operate in different atomization modes, to adapt to diversified requirements of different aerosol generating substrates on an atomization temperature. It should be noted that for different combinations of ordered/disordered pores and aerosol generating substrates, the specific power corresponding to the two atomization modes may vary.

It may be understood that a calculation formula for the liquid guide rate of isotropic disordered pore with uniformly distributed pore throats is as follows:

$$\frac{d_0{}^2 \varepsilon_0{}^3}{150(1 - \varepsilon_0)^2}.$$

$d_0$ is a characteristic pore throat diameter of the porous base 111, and $\varepsilon_0$ is the porosity of the disordered pores of the porous base 111.

A calculation formula for the liquid guide rate of the through pore 1113 is:

$$\frac{\varepsilon d^2}{32}.$$

$\varepsilon$ is the apparent porosity of the through pores 1113 (that is, it is considered that the porous base 111 is dense during calculation of the porosity), and d is the pore size of the through pore.

The liquid guide rate of the disordered pore is less than the liquid guide rate of the through pore 1113, and the characteristic pore throat diameter of the disordered pore is less than the pore size of the through pore 1113.

In an implementation, the porosity of the disordered pores of the porous base 111 is in a range of 3% to 40%. Optionally, when the porosity of the disordered pores of the porous base 111 is less than 3%, a conventional process cannot fabricate the disordered porous ceramic, or a requirement on a manufacturing process of the disordered porous ceramic is high. When the porosity of the disordered pores of the porous base 111 is greater than 40%, a structure of the through pore 1113 formed on the porous base 111 may be unstable.

In an implementation, the thermal conductivity of the porous base 111 is in a range of 0.1 W/m·K to 10 W/m·K, that is, the thermal conductivity of the porous base 111 is relatively low, which helps reduce a heat loss of the heating element 112. In this application, the base is arranged as the porous base 111 having a plurality of disordered pores, which helps reduce the thermal conductivity of the base of the heating assembly 11.

In an implementation, the ratio of the length of the through pore 1113 to the pore size of the through pore 1113 is in a range of 20:1 to 3:1. When the ratio of the length of the through pore 1113 to the pore size of the through pore 1113 is greater than 20:1, the aerosol generating substrate supplied through the capillary force of the through pore 1113 cannot satisfy an atomization demand of the heating element 112, which not only easily leads to dry heating, but also reduces an amount of aerosols generated from a single atomization; When the ratio of the length of the through pore 1113 to the pore size of the through pore 1113 is less than 3:1, the aerosol generating substrate is prone to flow out through the through pore 1113, which causes a leakage and a decrease in atomization efficiency, thus reducing a total aerosol amount. In other words, in consideration of liquid supply, the ratio of the length of the through pore 1113 to the pore size of the through pore 1113 is in a range of 20:1 to 3:1.

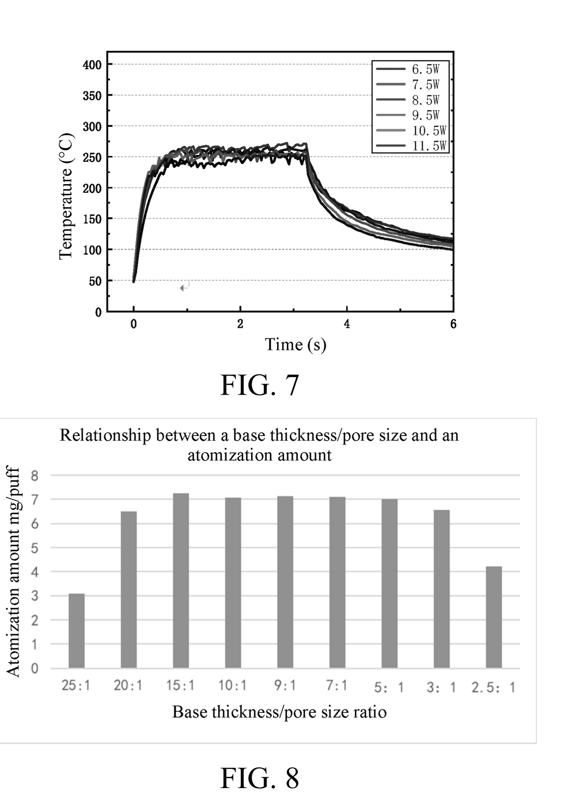

Optionally, the liquid absorbing surface 1111 and the atomization surface 1112 are arranged in parallel, the through pore 1113 is perpendicular to the liquid absorbing surface 1111, the length of the through pore 1113 is the same as the thickness of the porous base 111, and the ratio of the thickness of the porous base 111 to the pore size of the through pore 1113 is equal to the ratio of the length of the through pore 1113 to the pore size of the through pore 1113. In a specific embodiment, the ratio of the thickness of the porous base 111 to the pore size of the through pore 1113 is in a range of 15:1 to 5:1 (referring to FIG. 8, it is found through experiments that designing the ratio of the thickness of the dense substrate to the pore size of the through pore to be in the range of 15:1 to 5:1 exerts a desirable atomization effect, which is also applicable to the porous base 111).

In an implementation, the ratio of the center-to-center distance between two adjacent through pores 1113 to the pore size of the through pore 1113 is in a range of 3:1 to 1.5:1, to maximize strength of the porous base 111 while satisfying a liquid supply capability. When the ratio of the center-to-center distance between two adjacent through pores 1113 to the pore size of the through pore 1113 is greater than 3:1, the porosity of the through pores 1113 is excessively low, impeding liquid supply. When the ratio of the center-to-center distance between two adjacent through pores 1113 to the pore size of the through pore 1113 is less than 1.5:1, a part of the heating element 112 on the atomization surface 1112 is excessively narrow, resulting in a local hot spot. Optionally, the ratio of the center-to-center distance between two adjacent through pores 1113 to the pore size of the through pore 1113 is in a range of 3:1 to 2:1. Optionally, the ratio of the center-to-center distance between two adjacent through pores 1113 to the pore size of the through pore 1113 is in a range of 3:1 to 2.5:1.

In an implementation, the pore size of the through pore 1113 is in a range of 1 $\mu$m to 100 $\mu$m. When the pore size of the through pore 1113 is less than 1 $\mu$m, the liquid supply demand cannot be satisfied, resulting in a decrease in an aerosol amount. When the pore size of the through pore 1113 is greater than 100 $\mu$m, the aerosol generating substrate is prone to flow out through the through pore 1113, causing a leakage and a decrease in atomization efficiency. Optionally, the pore size of the through pore 1113 is in a range of 10 $\mu$m to 50 $\mu$m.

In an implementation, the thickness of the porous base 111 is in a range of 0.1 mm to 1 mm. When the thickness of porous base 111 is greater than 1 mm, the liquid supply demand cannot be satisfied, resulting in a decrease in an aerosol amount and a significant heat loss, and a high cost is required for providing the through pore 1113. When the thickness of the porous base 111 is less than 0.1 mm, the strength of the porous base 111 cannot be ensured, which impedes improvement of the performance of the electronic atomization device. Optionally, the thickness of the porous base 111 is in a range of 0.2 mm to 0.5 mm. Specifically, the liquid absorbing surface 1111 is parallel to the atomization surface 1112, and the thickness of the porous base 111 is uniform.

In an implementation, the plurality of through pores 1113 are distributed in an array. In other words, the plurality of through pores 1113 provided on the porous base 111 are regularly distributed, and adjacent through pores 1113 of the plurality of through pores 1113 have same center-to-center distance. Optionally, the plurality of through pores 1113 are arranged in a rectangular array; or the plurality of through pores 1113 are arranged in a circular array; or the plurality of through pores 1113 are arranged in a hexagonal array.

In an implementation, the heating element 112 is a heating film, a part of the heating film is arranged on the atomization surface 1112, and an other part of the heating film extends into the through pore 1113.

In an implementation, the heating element 112 adopts pulse heating.

In this application, an experimental test is further performed on the heating assembly 11 provided above. Specifically, referring to FIG. 4 to FIG. 6, FIG. 4 is a diagram of an experimental result of Experiment I using the heating assembly according to this application,

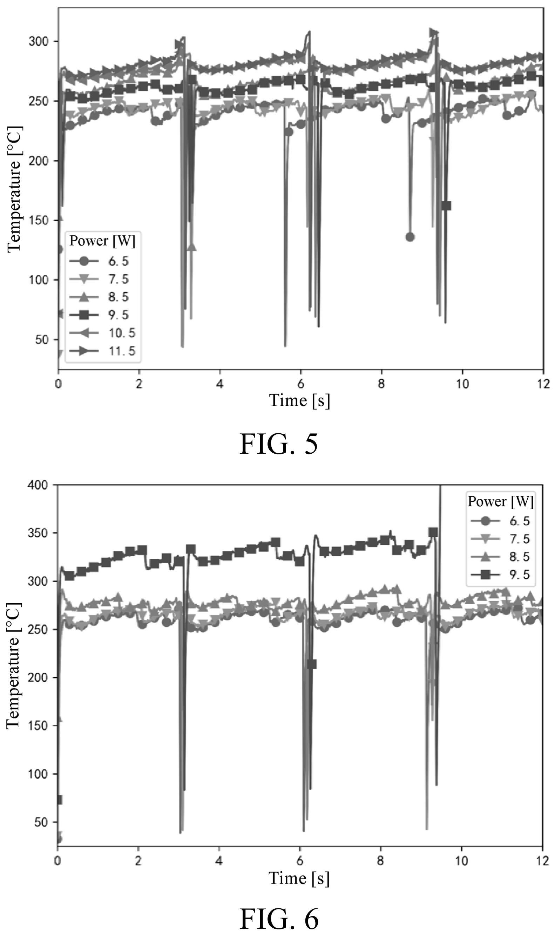

FIG. 5 is a diagram of an experimental result of Experiment II using the heating assembly according to this application, and FIG. 6 is a diagram of an experimental result of Experiment IIII using the heating assembly according to this application.

Experiment I: The porosity of the disordered pores of the porous base 111 is 25%, the thermal conductivity of the porous base 111 is 0.6 W/m·K, the thickness of the porous base 111 is 0.45 mm, the pore size of the through pore 1113 is 40 $\mu$m, the porosity of the through pores 1113 is 19.6%, the center-to-center distance between adjacent through pores 1113 is 80 $\mu$m, and the heating element 112 is a heating film. A heating and atomization experiment is performed by using the foregoing heating assembly 11. When the heating power is in a range of 5.5 w to 7.5 w, the liquid supply by the through pore 1113 and the disordered pore is sufficient, and the wet heating temperature of the heating assembly 11 substantially remains unchanged at about 210°C, that is, the heating assembly 11 is in the low-superheat atomization mode. When the heating power is in a range of 8.5 w to 12.5 w, the liquid supply is insufficient, which leads to dry heating, and the dry heating temperature of the heating assembly 11 increases as the power increases, that is, the heating assembly 11 is in the high-superheat atomization mode.

Experiment II: The porosity of the disordered pores of the porous base 111 is 25%, the thermal conductivity of the porous base 111 is 0.6 W/m·K, the thickness of the porous base 111 is 0.35 mm, the pore size of the through pore 1113 is 30 $\mu$m, the porosity of the through pores 1113 is 19.6%, the center-to-center distance between adjacent through pores 1113 is 60 $\mu$m, and the heating element 112 is a heating film. A heating and atomization experiment is performed by using the foregoing heating assembly 11. When the heating power is in a range of 6.5 w to 7.5 w, the liquid supply by the through pore 1113 and the disordered pore is sufficient, and the wet heating temperature of the heating assembly 11 substantially remains unchanged at about 230°C, that is, the heating assembly 11 is in the low-superheat atomization mode. When the heating power is in a range of 8.5 w to 11.5 w, the liquid supply is insufficient, which leads to dry heating, and the dry heating temperature of the heating assembly 11 increases as the power increases, that is, the heating assembly 11 is in the high-superheat atomization mode.

Experiment III: The porosity of the disordered pores of the porous base 111 is 25%, the thermal conductivity of the porous base 111 is 0.6 W/m·K, the thickness of the porous base 111 is 0.5 mm, the pore size of the through pore 1113 is 40 μm, the porosity of the through pores 1113 is 19.6%, the center-to-center distance between adjacent through pores 1113 is 80 μm, and the heating element 112 is a heating film. A heating and atomization experiment is performed by using the foregoing heating assembly 11. When the heating power is in a range of 6.5 w to 7.5 w, the liquid supply by the through pore 1113 and the disordered pore is sufficient, and the wet heating temperature of the heating assembly 11 substantially remains unchanged at about 250°C, that is, the heating assembly 11 is in the low-superheat atomization mode. When the heating power is in a range of 8.5 w to 9.5 w, the liquid supply is insufficient, which leads to dry heating, and the dry heating temperature of the heating assembly 11 increases as the power increases, that is, the heating assembly 11 is in the high-superheat atomization mode.

In this application, a wet-heating experiment is further performed on a heating assembly having through pores provided on a dense base. Specifically, the dense base has no disordered pores, the thickness of the dense base is 0.2 mm, the pore size of the through pore is 30 μm, and the heating element is a heating film. Referring to FIG. 7, FIG. 7 is a diagram of an experimental result of using a heating assembly having through pores provided on a dense base. It may be learned from FIG. 7 that, within the power range from 6.5 w to 11.5 w, the wet-heating temperature of the heating assembly 11 in a thermal balance state remains at about 250°C.

It may be learned from comparison among FIG. 4 to FIG. 7 that, in a case that the through pore is provided on the dense substrate and the power is in a range of 6.5 w to 11.5 w, the wet drying temperature of the heating assembly substantially remains unchanged. In other words, the heating assembly can implement only one atomization mode within the power range of 6.5 w to 11.5 w. In a case that the through pore 1113 is provided on the porous base 111 with disordered pores, in the power range of 6.5 w to 11.5 w, the heating assembly 11 can achieve two different atomization modes, i.e., the low-superheat atomization mode and the high-superheat atomization mode. After the power exceeds 8.5 w, the porous base 111 enters the high-superheat atomization mode from the low-superheat atomization mode.

In this application, a relationship between the ratio of the thickness of the dense base to the pore size of the through pore and the atomization amount is further described. For the result, refer to FIG. 8. FIG. 8 is a diagram of an experimental result between a ratio of a thickness of a dense base to a pore size of a through pore and an atomization amount. It may be learned from FIG. 8 that, when the ratio of the thickness of the dense base to the through pore is excessively large, the aerosol generating substrate supplied through the capillary action cannot satisfy the atomization demand, resulting in a decrease in the atomization amount. When the ratio of the thickness of the dense base to the through pore is excessively small, the aerosol generating substrate easily leaks through the through pore, resulting in a decrease in the atomization efficiency and the atomization amount. When the ratio of the thickness of the dense base to the pore size of the through pore is in a range of 15:1 to 5:1, a desirable atomization effect is achieved. The foregoing conclusion only relates to the thickness of the base and the pore size of the through pore, and does not relate to the material of the base. Therefore, the conclusion from the experiment on the dense base is also applicable to the porous base 111.

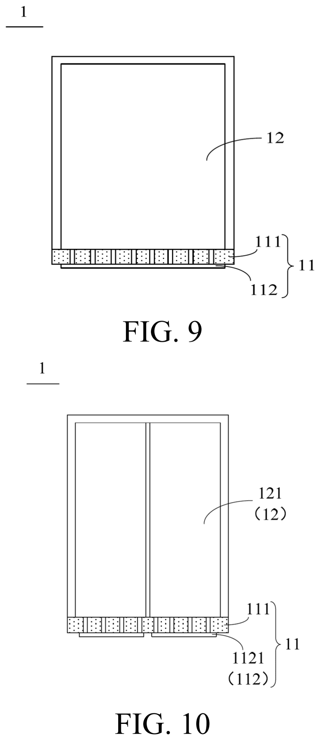

Referring to FIG. 9, FIG. 9 is a schematic structural diagram of a first embodiment of an atomizer according to this application.

An atomizer 1 includes a heating assembly 11 and a liquid storage cavity 12. The heating assembly 11 is the heating assembly 11 described in the foregoing embodiment, which is not described in detail herein again. The liquid storage cavity 12 is configured to store an aerosol generating substrate. The liquid storage cavity 12 is an open liquid storage cavity, that is, the aerosol generating substrate in the liquid storage cavity 12 is replaceable. A user may replace the aerosol generating substrate in the liquid storage cavity 12 based on a preference of the user. The heating assembly 11 is in fluid communication with the liquid storage cavity 12, and the heating assembly 11 is configured to atomize the aerosol generating substrate to generate aerosols. In this embodiment, one liquid storage cavity 12 is arranged.

Because the aerosol generating substrate in the liquid storage cavity 12 is replaceable, the atomizer 1 further includes a component detection element 13. The component detection element 13 is configured to detect the component of the aerosol generating substrate guided to the liquid absorbing surface 1111 of the porous base 111, to control, based on the component of the aerosol generating substrate, the heating assembly 11 to operate in a low-superheat atomization mode or a high-superheat atomization mode. In an implementation, the component detection element 13 is arranged on the porous base 111. In an implementation, the component detection element 13 is arranged in the liquid storage cavity 12.

The atomizer 1 further includes a temperature detection element (not shown in the figure). The temperature detection element is configured to detect the temperature of the heating element 112, to feed back the temperature of the heating element 112.

It may be understood that the atomizer 1 further includes structures such as an airflow channel and an atomization base. For details, refer to the related art, and the details are not described herein.

Referring to FIG. 10, FIG. 10 is a schematic structural diagram of a second embodiment of the atomizer according to this application.

The structure of the second embodiment of the atomizer 1 is substantially the same as the structure of the first embodiment of the atomizer 1, except that the structure of the liquid storage cavity 12 is different.

In the second embodiment of the atomizer 1, the liquid storage cavity 12 includes a plurality of liquid storage sub-cavities 121.

The atomization surface 1112 of the porous base 111 has a plurality of atomization regions (not marked in the figure). The plurality of atomization regions and the plurality of liquid storage sub-cavities 121 are arranged in one-to-one correspondence. The heating element 112 includes a plurality of independent heating sub-elements 1121 arranged on the plurality of atomization regions. The plurality of heating sub-elements 1121 and the plurality of atomization regions are arranged in one-to-one correspondence. One component detection element 13 is arranged in each liquid storage sub-cavity 121, or one component detection element 13 is arranged on a part of the porous base 111 corresponding to each atomization region. Each heating sub-element 1121 is correspondingly provided with one temperature detection element. Exemplarily, the liquid storage cavity 12 includes two liquid storage sub-cavities 121, and the heating element 112 includes two heating sub-elements 1121.

It may be understood that, the plurality of liquid storage sub-cavities 121 may store the same aerosol generating substrate or different aerosol generating substrates, and the heating sub-element 1121 corresponding to each liquid storage sub-cavity 121 selects, based on the component of the aerosol generating substrate in the liquid storage sub-cavity 121, the low-superheat atomization mode or the high-superheat atomization mode for operation of the heating sub-element 1121, to achieve taste tuning.

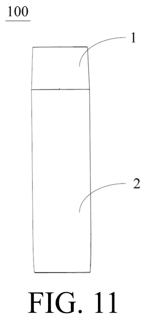

Referring to FIG. 11, FIG. 11 is a schematic structural diagram of an electronic atomization device according to an embodiment of this application.

In this embodiment, an electronic atomization device 100 is provided. The electronic atomization device 100 may be configured to atomize an aerosol generating substrate. The electronic atomization device 100 includes an atomizer 1 and a main unit 2 that are electrically connected to each other. The atomizer 1 and the main unit 2 may be integrally arranged, or may be detachably connected to each other, which may be designed based on a specific demand.

The atomizer 1 is configured to store an aerosol generating substrate and atomize the aerosol generating substrate to form aerosols that can be inhaled by a user. The atomizer 1 may be specifically used in various fields, such as medical treatment, beauty care, and recreational inhalation. In a specific embodiment, the atomizer 1 may be used in recreational inhalation, to atomize an aerosol generating substrate and generate aerosols for inhalation by a user. The following embodiments are all described by using recreational inhalation as an example. For a specific structure and function of the atomizer 1, refer to the specific structure and function of the atomizer 1 involved in the foregoing embodiments, and same or similar technical effects can be implemented. Details are not described herein.

The main unit 2 includes a battery (not shown in the figure) and a controller (not shown in the figure). The battery is configured to provide electrical energy for operation of the atomizer 1, so that the atomizer 1 can atomize the aerosol generating substrate to form aerosols. The controller includes a control circuit configured to control the operation of the atomizer 1, that is, control the atomizer 1 to atomize the aerosol generating substrate. The main unit 2 further includes other elements such as a battery holder and an airflow sensor.

The control circuit is configured to control an atomization mode of the heating element 112. The atomization mode includes a first atomization mode and a second atomization mode. In the first atomization mode, the control circuit controls the temperature of the heating element 112 to be greater than the bubble point temperature of the aerosol generating substrate and a difference between the temperature of the heating element 112 and the bubble point temperature of the aerosol generating substrate is less than or equal to a temperature threshold. In the second atomization mode, the control circuit controls the temperature of the heating element 112 to be greater than the bubble point temperature of the aerosol generating substrate and a difference between the temperature of the heating element 112 and the bubble point temperature of the aerosol generating substrate to be greater than the temperature threshold. The temperature threshold is in a range of 20°C to 40°C. Optionally, the temperature threshold is 30°C.

In an embodiment, the main unit 2 further includes a memory (not shown in the figure), and the memory stores a correspondence between a component of the aerosol generating substrate and the atomization mode. The control circuit is electrically connected to the component detection element 13. The control circuit is configured to select, based on the component of the aerosol generating substrate detected by the component detection element 13, the first atomization mode or the second atomization mode to control the heating element 112 for heating.

In an embodiment, the liquid storage cavity 12 includes a plurality of liquid storage sub-cavities 121, and the control circuit is configured to select, based on the component of the aerosol generating substrate in the liquid storage sub-cavity 121 detected by the component detection element 13, the first atomization mode or the second atomization mode to control the heating sub-element 1121 corresponding to the liquid storage sub-cavity 121 for heating.

In an embodiment, the control circuit is configured to control the atomization mode of the heating element 112 based on an instruction. For example, the user provides an input instruction through a button, touch, or the like, and the control circuit selects, based on the instruction, the first atomization mode or the second atomization mode to control the heating element 112 for heating, to generate aerosols of different tastes. For example, for the closed liquid storage cavity 12, the component of the aerosol generating substrate in the liquid storage cavity 12 is determined, and the taste of the aerosol generating substrate generated by using the first atomization mode or the second atomization mode is also determined. The user switches the first atomization mode to the second atomization mode by using an input instruction, to generate different tastes of the aerosol generating substrate.

In an embodiment, because the dry heating temperature of the heating assembly 11 increases as the power increases in the high-superheat atomization mode, in the high-superheat atomization mode, the control circuit may adjust the atomization temperature of the heating assembly 11 by controlling the power outputted to the heating assembly 11, to implement atomization under different atomization temperature conditions.

The foregoing descriptions are merely the implementations of this application, and are not intended to limit the scope of this application. Any equivalent structure or equivalent process transformation made by using the content of the specification and the drawings of this application or direct or indirect application to other related technical fields are encompassed in the protection scope of this application.

**Claims**

1.   A heating assembly, applied to an electronic atomization device and configured to atomize an aerosol generating substrate, comprising:

a porous base, having a plurality of disordered pores, wherein the porous base comprises a liquid absorbing surface and an atomization surface that are oppositely arranged, a plurality of through pores extending through the liquid absorbing surface and the atomization surface are provided on the porous base, and the liquid guide rate of each disordered pore is less than the liquid guide rate of each through pore; and
a heating element, arranged on the atomization surface.

2.   The heating assembly of claim 1, wherein the porosity of the disordered pores of the porous base is in a range of 3% to 40%.

3.   The heating assembly of claim 1, wherein the ratio of the length of the through pore to the pore size of the through pore is in a range of 20:1 to 3:1.

4.   The heating assembly of claim 3, wherein the liquid absorbing surface and the atomization surface are arranged in parallel, the through pore is perpendicular to the liquid absorbing surface, and the thickness of the porous base is the same as the length of the through pore.

5.   The heating assembly of claim 1, wherein the ratio of the center-to-center distance between two adjacent through pores to the pore size of the through pore is in a range of 3:1 to 1.5:1.

6.   The heating assembly of claim 1, wherein the pore size of the through pore is in a range of 1 $\mu$m to 100 $\mu$m, and preferably, 10 $\mu$m to 50 $\mu$m.

7.   The heating assembly of claim 1, wherein the thickness of the porous base is in a range of 0.1 mm to 1 mm.

8.   The heating assembly of claim 1, wherein the thermal conductivity of the porous base is in a range of 0.1 W/m·K to 10 W/m·K.

9.   The heating assembly of claim 1, wherein the plurality of through pores are distributed in an array.

10.  The heating assembly of claim 1, wherein the heating element is a heating film, a part of the heating film is arranged on the atomization surface, and an other part of the heating film extends into the through pore.

11.  An atomizer, comprising:

a liquid storage cavity, configured to store an aerosol generating substrate; and
a heating assembly, wherein the heating assembly is in fluid communication with the liquid storage cavity, the heating assembly is configured to atomize the aerosol generating substrate, and the heating assembly is the heating assembly of any one of claims 1 to 10.

12.  The atomizer of claim 11, wherein the liquid storage cavity is an open liquid storage cavity, and the atomizer further comprises a component detection element configured to detect a component of the aerosol generating substrate guided to the liquid absorbing surface of the porous base.

13.  The atomizer of claim 12, further comprising a temperature detection element configured to detect the temperature of the heating element.

14.  The atomizer of claim 12, wherein the component detection element is arranged on the porous base, or the component detection element is arranged in the liquid storage cavity.

15. The atomizer of claim 14, wherein the liquid storage cavity comprises a plurality of liquid storage sub-cavities, the atomization surface comprises a plurality of atomization regions, the plurality of atomization regions and the plurality of liquid storage sub-cavities are arranged in one-to-one correspondence, the heating element comprises a plurality of independent heating sub-elements arranged in the plurality of atomization regions, the plurality of heating sub-elements and the plurality of atomization regions are arranged in one-to-one correspondence, and one component detection element is arranged in each liquid storage sub-cavity or one component detection element is arranged on a part of the porous base corresponding to each atomization region.

16. An electronic atomization device, comprising:

an atomizer, wherein the atomizer is the atomizer of any one of claims 11 to 15; and
a main unit, configured to provide electric energy for operation of the heating assembly of the atomizer and control the heating assembly of the atomizer to atomize the aerosol generating substrate.

17. The electronic atomization device of claim 16, wherein the main unit comprises a control circuit, the control circuit is configured to control an atomization mode of the heating element, the atomization mode comprises a first atomization mode and a second atomization mode, in the first atomization mode, the control circuit controls the temperature of the heating element to be greater than the bubble point temperature of the aerosol generating substrate and a difference between the temperature of the heating element and the bubble point temperature of the aerosol generating substrate to be less than or equal to a temperature threshold, and in the second atomization mode, the control circuit controls the temperature of the heating element to be greater than the bubble point temperature of the aerosol generating substrate and the difference between the temperature of the heating element and the bubble point temperature of the aerosol generating substrate to be greater than the temperature threshold.

18. The electronic atomization device of claim 17, wherein the temperature threshold is in a range of 20°C to 40°C.

19. The electronic atomization device of claim 17, wherein the atomizer is the atomizer of any one of claims 12 to 15, the main unit further comprises a memory, the memory stores a correspondence between a component of the aerosol generating substrate and the atomization mode, the control circuit is electrically connected to the component detection element, and the control circuit is configured to select, based on the component of the aerosol generating substrate detected by the component detection element, the first atomization mode or the second atomization mode to control the heating element for heating.

20. The electronic atomization device of claim 19, wherein the atomizer is the atomizer of claim 15, and the control circuit is configured to select, based on the component of the aerosol generating substrate in the liquid storage cavity detected by the component detection element, the first atomization mode or the second atomization mode to control the heating sub-element corresponding to the liquid storage sub-cavity for heating.

11

1113

112

1111

112

111

1112

1111

FIG. 1

1113

112

111

Aerosol
generating
substrate

Atomization cores
formed on a rough surface

FIG. 2

FIG. 3

FIG. 4

FIG. 5

FIG. 6

FIG. 7

FIG. 8

1

FIG. 9

1

FIG. 10

FIG. 11

## INTERNATIONAL SEARCH REPORT

| | |
|---|---|
| International application No. | |
| | **PCT/CN2024/085343** |

| | |
|---|---|
| **A.    CLASSIFICATION OF SUBJECT MATTER** | |
| A24F40/46(2020.01)i;  A24F40/40(2020.01)i | |
| According to International Patent Classification (IPC) or to both national classification and IPC | |

**B.    FIELDS SEARCHED**

Minimum documentation searched (classification system followed by classification symbols)

   IPC: A24F

Documentation searched other than minimum documentation to the extent that such documents are included in the fields searched

Electronic data base consulted during the international search (name of data base and, where practicable, search terms used)

   CNABS, CNTXT, CNKI: 基体, 基质, 多孔, 微孔, 通孔, 过孔, 导通孔, 贯通孔, 贯孔, 透孔, 穿孔, 加热, 发热, 检测, 组分, 成分, 传感; VEN, DWPI, USTXT, EPTXT, WOTXT, GOOGLE SCHOLAR: matrix, substrate, porous, microporous, through hole, via, perforation, heating, detection, composition, sensing

**C.    DOCUMENTS CONSIDERED TO BE RELEVANT**

| Category* | Citation of document, with indication, where appropriate, of the relevant passages | Relevant to claim No. |
|---|---|---|
| X | CN 114794573 A (SHENZHEN SMOORE TECHNOLOGY LTD.) 29 July 2022 (2022-07-29) <br> description, paragraphs 44-87, and figures 1-16 | 1-20 |
| X | CN 111264907 A (SHENZHEN SMOORE TECHNOLOGY LTD.) 12 June 2020 (2020-06-12) <br> description, paragraphs 38-69, and figures 1-3 | 1-20 |
| A | CN 114391675 A (HAINAN MOER BROTHERS TECHNOLOGY CO., LTD.) 26 April 2022 (2022-04-26) <br> entire document | 1-20 |
| A | CN 114532609 A (XIAMEN SKY SEMICONDUCTOR TECHNOLOGY CO., LTD.) 27 May 2022 (2022-05-27) <br> entire document | 1-20 |
| A | CN 114794568 A (SHENZHEN SMOORE TECHNOLOGY LTD.) 29 July 2022 (2022-07-29) <br> entire document | 1-20 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 July 2024** | **06 July 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/085343** |

| C. | DOCUMENTS CONSIDERED TO BE RELEVANT | |
| --- | --- | --- |
| Category* | Citation of document, with indication, where appropriate, of the relevant passages | Relevant to claim No. |
| A | EP 3417726 A1 (SHENZHEN SMOORE TECHNOLOGY LTD.) 26 December 2018 (2018-12-26) entire document | 1-20 |

Form PCT/ISA/210 (second sheet) (July 2022)

| INTERNATIONAL SEARCH REPORT | | International application No. |
|---|---|---|
| Information on patent family members | | **PCT/CN2024/085343** |

| Patent document cited in search report | | | Publication date (day/month/year) | Patent family member(s) | | | Publication date (day/month/year) |
|---|---|---|---|---|---|---|---|
| CN | 114794573 | A | 29 July 2022 | WO | 2022179231 | A2 | 01 September 2022 |
| CN | 111264907 | A | 12 June 2020 | CN | 212306804 | U | 08 January 2021 |
| CN | 114391675 | A | 26 April 2022 | CN | 216931904 | U | 12 July 2022 |
| CN | 114532609 | A | 27 May 2022 | None | | | |
| CN | 114794568 | A | 29 July 2022 | None | | | |
| EP | 3417726 | A1 | 26 December 2018 | WO | 2017139963 | A1 | 24 August 2017 |
| | | | | EP | 3417726 | B1 | 11 November 2020 |
| | | | | US | 2020120983 | A1 | 23 April 2020 |
| | | | | US | 10986868 | B2 | 27 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310540174